# EUROPEAN PATENT SPECIFICATION

(11) **EP 3 944 053 B1**
(45) Date of publication and mention of the grant of the patent: **03.04.2024**
(21) Application number: 21183393.4
(22) Date of filing: 02.07.2021
(51) Int. Cl.: G05D 13/00, G05D 1/06, B64D 31/06, B64D 45/00

(54) **CONTROLLERS AND AIRCRAFT WITH VARIABLE ENGINE THRUST TAKEOFF SYSTEM**
REGLER UND FLUGZEUG MIT VARIABLEM MOTORSCHUBSTARTSYSTEM
ORGANES DE COMMANDE ET AÉRONEF DOTÉ D'UN SYSTÈME DE DÉCOLLAGE À POUSSÉE MOTEUR VARIABLE

(30) Priority: 23.07.2020 US 202016947226
(43) Date of publication of application: 26.01.2022
(73) Proprietor: Gulfstream Aerospace Corporation, Savannah, Georgia 31402 (US)
(72) Inventor: HORNE, Thomas C., Savannah, 31402 (US); LANDERS, Thomas, Savannah, 31402 (US); LAVRISA, Thomas P., Savannah, 31402 (US); SWAINE, Suzanne, Savannah, 31402 (US)
(74) Representative: LKGlobal UK Ltd.

(56) References cited:
- EP-A2- 1 616 788
- US-B2- 8 095 300
- Unknown: "Pilot Guide to Takeoff Safety", , 6 April 2008 (2008-04-06), pages 1-45, XP055870372, Retrieved from the Internet: URL:https://www.faa.gov/other_visit/aviati on_industry/airline_operators/training/med ia/takeoff_safety.pdf [retrieved on 2021-12-08]

## Description

### TECHNICAL FIELD

The technical field relates generally to takeoff flight control systems for aircraft, and more particularly relates to flight control systems, flight controller algorithms, and aircraft with an engine power command system with takeoff acceleration limiting function to reduce occupant discomfort experienced from early peak acceleration during aircraft takeoff run and initial climb.

### BACKGROUND

Typically, during an aircraft takeoff procedure the crew sets an engine power setting, either manually or by automatic system, and conducts the takeoff run and initial climb with the throttle handles in a fixed location. Early in the takeoff run the engines typically produce more thrust, and since there is little aerodynamic drag on the aircraft the acceleration is typically the highest at that point. Later in the takeoff run when the aircraft speed has increased, the thrust produced by the engines reduces and the aerodynamic drag has increased so the acceleration is less. This results in a "peak acceleration" early in the takeoff. This peak acceleration may cause physical discomfort or mental unease to aircraft passengers so it is desirable to reduce this peak acceleration as much as possible while maintaining sufficient acceleration to achieve liftoff. An example of a flight control system for takeoff is disclosed in EP 1 616 788 A2.

Pilots will sometimes perform a derated. or reduced thrust, takeoff, using less than full available thrust as to make the passengers more comfortable and to reduce the strain on the engines. However, this derated takeoff requires additional runway length which must be calculated for each takeoff taking into account environmental factors such as runway characteristics, air temperature and wind speed, as well as aircraft weight. Derated takeoffs also result in an increased acceleration early in the takeoff as compared to later in the takeoff. As such, it is desirable to provide flight systems, flight control algorithms, and aircraft that provide improved variable engine thrust takeoff control. In addition, other desirable features and characteristics will become apparent from the subsequent summary and detailed description, and the appended claims, taken in conjunction with the accompanying drawings and this background.

### SUMMARY

Disclosed herein are control systems, control algorithms, aircraft and related control logic for provisioning aircraft, methods for making and methods for operating such systems, and other vehicles equipped with onboard control systems. By way of example, and not limitation, there is presented an aircraft with variable engine thrust takeoff systems and controllers.

In a first non-limiting embodiment, a flight control system includes, but is not limited to an input configured to indicate a selection of a variable engine thrust takeoff mode, an inertial sensor operative to detect a force on an aircraft and to generate an acceleration data signal indicative of an acceleration of the aircraft, a thrust controller operative to control a thrust of an aircraft engine in response to a thrust control signal, and a processor operative to calculate a calculated acceleration in response to the selection of the variable engine thrust takeoff mode, to generate the thrust control signal corresponding to a first thrust level associated with the calculated acceleration, for determining a measured acceleration in response to the acceleration data signal, and for adjusting the thrust control signal in response to a difference between the calculated acceleration and the measured acceleration.

In accordance with another aspect of the present disclosure, a method for calculating a calculated acceleration in response to a takeoff distance and a selection of a variable engine thrust takeoff mode, generating an initial thrust control signal in response to the calculated acceleration, controlling a thrust of an aircraft engine in response to the initial thrust control signal, measuring a measured acceleration of the aircraft, generating an updated thrust control signal in response to a difference between the calculated acceleration and the measured acceleration, and controlling the thrust of the aircraft engine in response to the updated thrust control signal.

In accordance with another aspect of the present disclosure, an aircraft including an aircraft engine configured to propel the aircraft in response to a fuel supply, a thrust controller for controlling the fuel supply in response to a thrust control signal, an airspeed sensor for detecting an airspeed of the aircraft, an inertial measurement unit for detecting an inertial force, a user input for indicating a selection of a variable engine thrust takeoff mode, and a processor configured to calculate a calculated acceleration in response to the selection of the variable engine thrust takeoff mode, an aircraft weight and a takeoff distance, to generate the thrust control signal indicative of a first thrust level, to couple the thrust control signal indicative of the first thrust level to the thrust controller, to determine a measured acceleration in response to the airspeed of the aircraft and the inertial force, for adjusting the thrust control signal in response to a difference between the calculated acceleration and the measured acceleration, and to couple the thrust control signal adjusted in response to a difference between the calculated acceleration and the measured acceleration to the thrust controller.

Other objects, advantages and novel features of the exemplary embodiments will become more apparent from the following detailed description of exemplary embodiments and the accompanying drawings.

### BRIEF DESCRIPTION OF DRAWINGS

The above-mentioned and other features and advantages of this invention, and the manner of attaining them, will become more apparent and the system and method will be better understood by reference to the following description of embodiments of the invention taken in conjunction with the accompanying drawings.
FIG. 1 is a simplified diagram illustrating a non-limiting embodiment of an aircraft in accordance with the teachings of the present disclosure;
FIG. 2a is a graph illustrative of an exemplary acceleration during takeoff for an exemplary aircraft in accordance with the present disclosure.
FIG. 2b is a graph illustrative of an exemplary velocity during takeoff for an exemplary aircraft in accordance with the present disclosure.
Fig. 3. is a simplified block diagram illustrating a non-limiting embodiment of a system for implementing a variable engine thrust takeoff system in an aircraft in accordance with the present disclosure.
FIG. 4 shows a flow diagram illustrating a non-limiting embodiment of a method of implementing a variable engine thrust takeoff system in an aircraft in accordance with the teachings of the present disclosure.
FIG. 5 is a simplified block diagram illustrating another non-limiting embodiment of a system for implementing a variable engine thrust takeoff system in an aircraft in accordance with the present disclosure.
FIG. 6 shows a flow diagram illustrating another non-limiting embodiment of a method of providing a variable engine thrust takeoff system in an aircraft in accordance with the teachings of the present disclosure.

The exemplifications set out herein illustrate preferred embodiments of the invention, and such exemplifications are not to be construed as limiting the scope of the invention in any manner. The invention is defined by the appended claims.

### DETAILED DESCRIPTION

The following detailed description is merely exemplary in nature and is not intended to limit the invention or the application and uses of the invention. Furthermore, there is no intention to be bound by any theory presented in the preceding background or the following detailed description. Various non-limiting embodiments of flight control systems, flight control algorithms, and aircraft are provided. In general, the disclosure herein describes a flight control system design to be used during the takeoff phase of flight.

During takeoff, typically the flight crew sets a power setting, either manually or by automatic system, and conducts the takeoff run and initial climb with the throttle handles in a fixed location. Early in the takeoff run the engines produce more thrust and there is less aerodynamic drag so the acceleration is typically the highest. Later in the takeoff run when the aircraft speed has increased, the thrust produced by the engines reduces and the aerodynamic drag has increased so the acceleration is less. This results in a "peak acceleration" early in the takeoff. Pilots will sometimes perform a "derated" takeoff, using less than full available thrust to make the passengers more comfortable, and to reduce the strain on the engines, but this too results in a higher acceleration early in the takeoff. A greater understanding may be obtained from reference to the drawings.

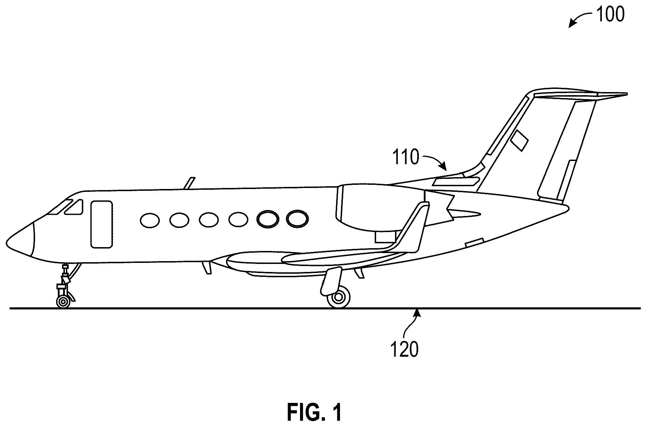

FIG. 1 is illustrative of an exemplary environment 100 for an exemplary control system for implementing a variable engine thrust takeoff system in an aircraft 110 according to an exemplary embodiment of the present disclosure. In this exemplary environment, the aircraft 110 is operative to perform a takeoff from a runway 120 according to an exemplary application of the present disclosure. In this exemplary embodiment, the aircraft 110, via a takeoff thrust control algorithm, is operative to adjust the throttle setting of the aircraft engines in order to vary the engine power setting so that more thrust is produced later in the takeoff and that a constant acceleration is maintained during the takeoff operation. As the aircraft velocity increases, the thrust control algorithm is operative to increase the throttle setting in order to make the acceleration more constant. This variable throttle takeoff may permit a shorter takeoff run with the same maximum acceleration as a derated takeoff, or a lower maximum acceleration and the same runway length needed.

In an exemplary embodiment of proposed system, an airspeed sensor, a geolocation and time sensor, an accelerometer or an inertial measurement unit may be used to provide feedback of the acceleration to the takeoff thrust controller. This acceleration feedback may be used in conjunction with a calculated variable thrust setting in order to achieve a desired takeoff speed at a desired distance along the runway. For example, the acceleration detected by the inertial measurement unit may be used to confirm the desired acceleration and current velocity to ensure that the desired takeoff speed will be reached at the desired distance. The variable thrust setting is calculated in response to takeoff weight, takeoff speed, and desired distance along the runway indicating a preferred takeoff point. In addition, the variable thrust setting may be calculated in response to an initial thrust setting by a pilot, a runway length and a required takeoff velocity in order to maintain a constant aircraft acceleration on the runway and to avoid excessive peak accelerations which may cause discomfort to aircraft occupants.

In another exemplary embodiment, the system may use an estimate with knowledge of how thrust and drag change with speed, as well as the delay from throttle to thrust, and have a scheduled throttle advance as speed increases, or maybe just with time. In one aspect of the exemplary embodiment, the system may be restricted such that the throttle may only be advanced never retarded, and the initial throttle setting should be sufficient for a safe take-off.

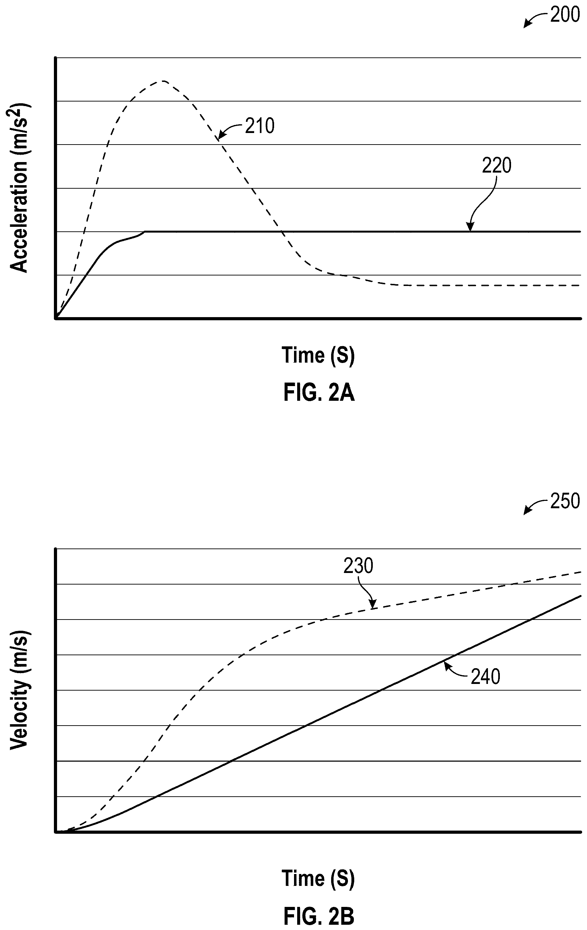

Turning now to Fig. 2a, a first chart 200 illustrating an exemplary acceleration during takeoff for an exemplary aircraft. In the first chart 200 a first acceleration curve 210 representing an acceleration for an aircraft performing a takeoff according to a standard takeoff procedure is shown. The first acceleration curve 210 shows a peak acceleration early in the takeoff operation and wherein the acceleration rate drops during a later part of the takeoff acceleration. This standard takeoff procedure having a fixed engine thrust throughout the takeoff operation results in the undesirable high acceleration rate which may be uncomfortable to aircraft occupants. The second acceleration curve 220 represents an acceleration for an aircraft performing a takeoff operation with a variable engine thrust in accordance with the teachings of the present disclosure. The second acceleration curve 220 shows the acceleration increasing according to an initial thrust level until a maximum acceleration level is reached. In this exemplary embodiment, the maximum acceleration level is four meters per second. The exemplary system is then operative to vary the thrust level to maintain the maximum acceleration level until the desired takeoff velocity is reached. When the desired takeoff velocity is reached, the exemplary system is then operative to reduce the thrust level to maintain the desired takeoff velocity or to maintain the initial thrust level during aircraft rotation.

Turning now to Fig. 2b, a second chart 250 illustrating an exemplary velocity during takeoff for an exemplary aircraft. In the first chart 250 a first exemplary velocity curve 230 representing an exemplary aircraft velocity corresponding to the first acceleration curve 210 for an aircraft performing a takeoff according to a standard takeoff procedure is shown. The first exemplary velocity curve shows 230 that the aircraft experiences a faster change in velocity during the first stage of the takeoff operation and a slower change in velocity during the second portion of the takeoff operation. This faster change in velocity may result in an undesirable increased stress on the aircraft engines and other aircraft components. The second exemplary velocity curve, corresponding to an acceleration for an aircraft performing a takeoff operation with a variable engine thrust in accordance with the teachings of the present disclosure shows a uniform increase in velocity thereby limiting undesirable stress on aircraft engines and components.

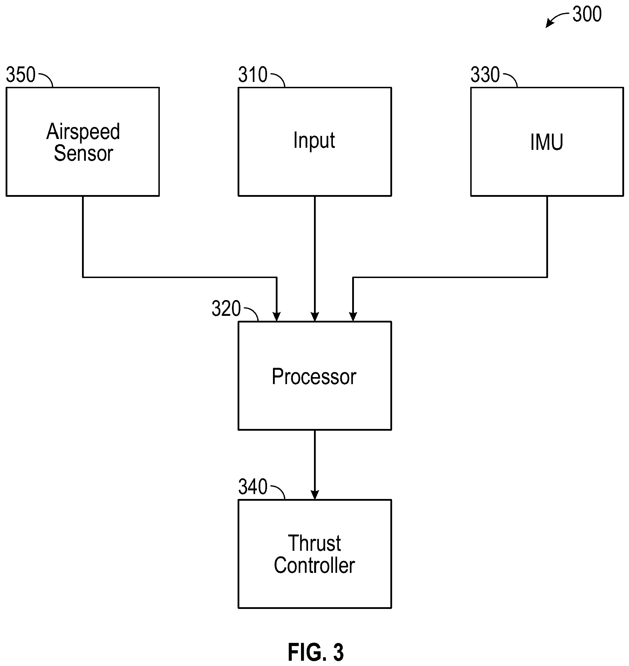

Turning now to Fig. 3, a block diagram illustrating a system 300 for implementing a variable engine thrust takeoff system in an aircraft in accordance with the teachings of the present disclosure. The exemplary system 300 may include an input 310, a processor 320 an inertial measurement unit (IMU) 330, a thrust controller 340 and an airspeed sensor 350.

The input 310 may be an input for receiving control commands and data for controlling an aircraft during takeoff wherein the input 310 may include a plurality of input means, such as a thrust levers, control panels switches, dials, and buttons, and the like. In a first exemplary embodiment, the input 310 may be operative to receive a pilot input activating the variable engine thrust takeoff system. The input 310 may be further operative to receive a thrust lever position in response to a pilot adjusting the thrust lever. For example, during takeoff, the pilot may set the thrust levers to the derated detent position. The input 310 may include of inputs for receiving aircraft data from a pilot input, such as fuel weight, or may be received from a service provider, such as runway length, or be received from other aircraft sensors, such as aircraft weight and outside temperature. In one exemplary embodiment, positioning the thrust levers at the derated detent position is operative to generate a control signal indicative of an activation of the variable engine thrust takeoff system.

The IMU 330 is a device used to report a specific force of a body. The IMU 330 may measure angular or linear acceleration and may be used to determine a lateral acceleration, a longitudinal acceleration, a yaw rate and pitch of an aircraft. The IMU 330 is mounted within the aircraft and is operative to generate a control signal indicative of the measured specific forces and to couple this control signal to the processor 320. In this exemplary embodiment, the IMU 330 is operative to detect and provide an acceleration vector of the aircraft to the processor 320.

The airspeed sensor 350 is operative to detect and report an airspeed of an aircraft in kilometers per hour, knots, meters per second or the like. Typically, an airspeed sensor 350, or airspeed indicator, measures the difference in air pressure from a pitot tube when the aircraft is stationary and when the aircraft is in forward movement. In this exemplary embodiment, the airspeed sensor 350 is operative to estimate an aircraft airspeed during takeoff in response to air pressure changes in the pitot tube and to provide this airspeed to the processor 320.

The processor 320 is operative to receive the aircraft data from the input 310 and to calculate an acceleration for reaching the takeoff speed at a desired distance during takeoff. A linear acceleration value may be calculated as the velocity squared divided by two times the distance or a = v2 / 2d. For example, an aircraft at a certain air density and payload may desire a takeoff distance of 6000 feet (1830 m), which should include a safety buffer, and must reach a velocity of 150 knots (77.17 m/s). For these values, the linear acceleration is 1.63 m/s2. The processor 320 is further operative to generate a thrust control signal to couple to the thrust controller 340 in response to a comparison of the aircraft acceleration measured by the IMU 330 and the calculated acceleration. If the measured acceleration is lower than the calculated acceleration, the processor 320 is operative to adjust the thrust control signal such that the aircraft engine thrust is increased. When performing this type of take-off, an additional safety criterion should be applied to ensure that a safe take-off speed is reached by the end of the runway even if the processor 320 or Thrust Controller did not increase the thrust. Alternatively, the processor 320 may be operative to calculate a current expected velocity during the takeoff operation and compare that expected current velocity to a measured current velocity received via the airspeed sensor 350. The processor 320 is then operative to adjust the thrust control signal coupled to the thrust controller 340 in order to increase or decrease the current velocity in response to the comparison. In an additional exemplary embodiment the processor 320, or other pre-flight computation device, may determine a fixed throttle setting for take-off that provides appropriate safety margins with the decay of acceleration that would be present as explained previously such as a traditional flex or de-rated take-off. The processor 320 in then operative to compute an advancement of the throttles based on the sensed airspeed to maintain a more constant acceleration, thereby reducing the take-off distance required without compromising passenger comfort.

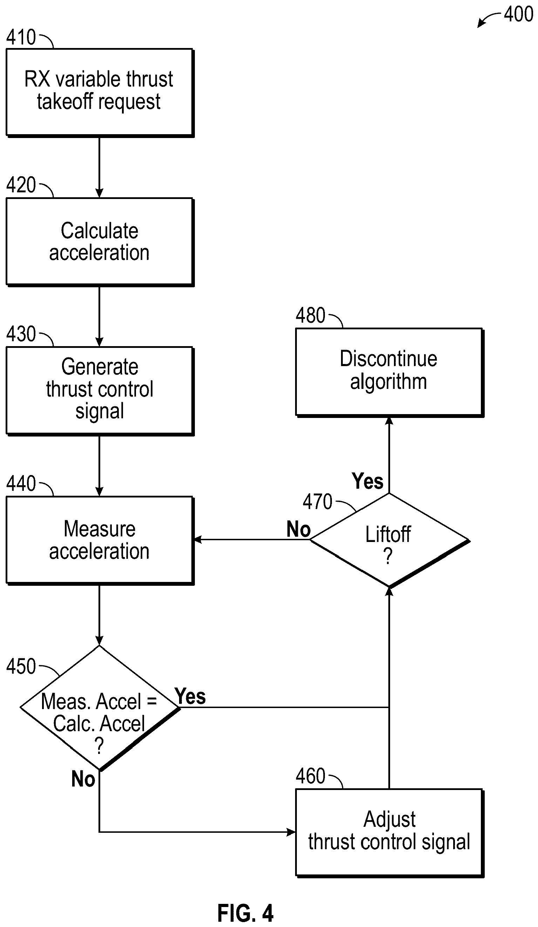

Turning now to Fig. 4, a flow diagram illustrating another non-limiting embodiment of a method 400 implementing a variable engine thrust takeoff system in an aircraft in accordance with the teachings of the present disclosure is shown. The method is first operative to receive 410 a control signal to activate a variable engine thrust takeoff algorithm for performing an aircraft takeoff operation. The control signal may be received from a user input within an aircraft control panel indicative of a request to perform the variable thrust takeoff. Alternatively, during a takeoff procedure, the thrust levers may be set at a position indicative to a request to perform the variable engine thrust takeoff, such as at a derated detent or the like.

The method is next operative to calculate 420 an acceleration in response to the request to perform the variable engine thrust takeoff. The acceleration may be calculated in response to a takeoff distance, which is the distance between the starting point of the takeoff operation to the point where the aircraft leaves the ground, and the takeoff velocity, the speed at which the aircraft must be moving in order to achieve liftoff. The acceleration calculated may take into consideration a distance less than the takeoff distance to provide a margin of error in case of the instance of change of wind direction, change in air pressure or the like which may result in a reduction in acceleration during a portion of the takeoff operation.

In response to the calculated acceleration, the method is then operative to generate 430 a thrust control signal to couple to an aircraft engine thrust controller. The thrust controller may be operative to control a fuel flow or fuel pressure to an aircraft engine in order to increase or decrease the thrust, or forward propulsion power, of the aircraft engine. The thrust control signal may initially indicate a thrust level corresponding to the calculated acceleration.

The method is next operative to determine 440 a measured acceleration of the aircraft. The measured acceleration of the aircraft may be determined in response to a output data from an IMU, may be determined in response to a airspeed velocity measurement, or may be determined in response to a position location determination, such as a location detected by a global positioning system or the like. For example, the measured acceleration may be determined in response to a velocity measurement over a distance interval using a = (v2 -vi2)/ 2d where a is the acceleration , v is the current velocity at the end of the distance interval, vi is the initial velocity at the start of the distance interval and d is the distance, or length, of the interval. Alternatively, the measured acceleration may be estimated in response to a distance traveled during the takeoff operation and the current velocity using a = v2 / 2d where a is the measured acceleration, v is the current velocity and d is the distance traveled.

The method is next operative to compare 450 the calculated acceleration with the measured acceleration. If the measured acceleration does not equal the calculated acceleration, or is not within a range around the calculated acceleration, the method is then operative to adjust 460 the throttle control signal to increase or decrease the thrust of the aircraft engine in response to a comparison of the measured acceleration to the calculated acceleration. If the measured acceleration is greater than the calculated acceleration, the method is operative to adjust the thrust control signal in order to reduce the amount of thrust provided by the aircraft engine. If the measured acceleration is less than the calculate acceleration, the method is operative to adjust the thrust control signal in order to increase the amount of thrust provided by the aircraft engine.

The method is next operative to detect 470 if a liftoff event, or a takeoff event, has occurred, indicating that the aircraft has become airborne. If a liftoff event has occurred, the method is operative to discontinue 480 the variable engine thrust algorithm. If a liftoff event has not occurred, the method is operative to return to determining 440 the measured acceleration. A liftoff event may be detected in response to a force measurement detected on the aircraft running gear, or may be detected in response to a rotation event of the aircraft measured by an IMU or measured in response to a movement of a control stick or other pilot control mechanism indicative of a rotation event of the aircraft.

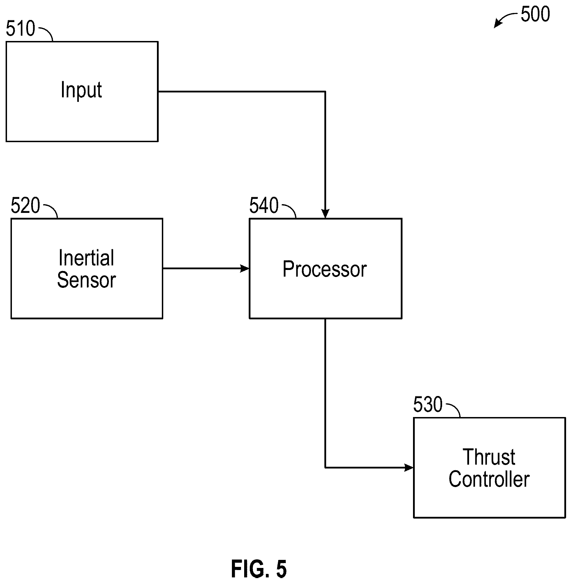

Turning now to Fig. 5, a block diagram illustrating a system 500 for variable engine thrust takeoff system in an aircraft according to an exemplary embodiment of the present disclosure is shown. The exemplary system 500 may include an input 510, an inertial sensor 520, a thrust controller 530 and a processor 540.

In this exemplary embodiment, the input 510 may be configured to indicate a selection of a variable engine thrust takeoff mode. The input 510 may include a thrust lever located on an aircraft control panel or may include a user input, such as a selector switch, computer control panel software option selection, or other user configurable interface. In one exemplary embodiment, the input 510 may be a thrust lever having a derated takeoff detent and where a variable engine thrust takeoff selection indicator may be generated in response to positioning the thrust lever at the derated takeoff detent.

The exemplary system 500 may further include an inertial sensor 520 operative to detect a force on an aircraft and to generate an acceleration data signal indicative of an acceleration of the aircraft. In an exemplary embodiment, the inertial sensor 520 is an IMU and is operative to detect lateral, longitudinal and vertical forces as well as accelerations in pitch, roll and yawl. Alternatively, the inertial sensor 530 may include a velocity sensor operative to measure an aircraft velocity and a location sensor operative to determine an aircraft location, wherein the inertial sensor 530 is then operative to provide a calculated acceleration in response to time, distance, initial velocity and measured velocity.

The exemplary system 500 may further include a thrust controller 530 operative to control a thrust of an aircraft engine in response to a thrust control signal. In one exemplary embodiment, the thrust controller 530 is operative to control a fuel supply to the aircraft engine in response to the thrust control signal. The fuel supply may be controlled by controlling a fuel pressure of a fuel pump or a fuel flow rate to the aircraft engine.

The exemplary system 500 may further include a processor 540 operative to calculate a calculated acceleration in response to the selection of the variable engine thrust takeoff mode, to generate the thrust control signal corresponding to a first thrust level associated with the calculated acceleration, for determining a measured acceleration in response to the acceleration data signal, and for adjusting the thrust control signal in response to a difference between the calculated acceleration and the measured acceleration. In one exemplary embodiment, the measured acceleration may be determined in response to an airspeed detected by an airspeed sensor in addition to data from the inertial sensor 520. In another exemplary embodiment, the processor 540 may be further operative to determine the measured acceleration and adjust the thrust control signal periodically during a takeoff operation. Thus, the engine thrust may be continuously adjusted to maintain a constant measured acceleration close to the desired calculated acceleration. In another exemplary embodiment, the calculated acceleration may be calculated in response to at least one of an aircraft weight, a takeoff distance, and an ambient air pressure.

In one exemplary embodiment, the system 500 may be an aircraft having an aircraft engine configured to propel the aircraft in response to a fuel supply, a thrust controller 530 for controlling the fuel supply in response to a thrust control signal, an airspeed sensor for detecting an airspeed of the aircraft, an inertial sensor 520, such as an inertial measurement unit, for detecting an inertial force, a user input 510 for indicating a selection of a variable engine thrust takeoff mode, and a processor 540, such as an aircraft configuration controller, configured to calculate a calculated acceleration in response to the selection of the variable engine thrust takeoff mode, an aircraft weight and a takeoff distance, to generate the thrust control signal indicative of a first thrust level, to couple the thrust control signal indicative of the first thrust level to the thrust controller, to determine a measured acceleration in response to the airspeed of the aircraft and the inertial force, for adjusting the thrust control signal in response to a difference between the calculated acceleration and the measured acceleration, and to couple the thrust control signal adjusted in response to a difference between the calculated acceleration and the measured acceleration to the thrust controller 530. In on exemplary embodiment, the user input 510 may be a thrust lever having a derated takeoff detent position.

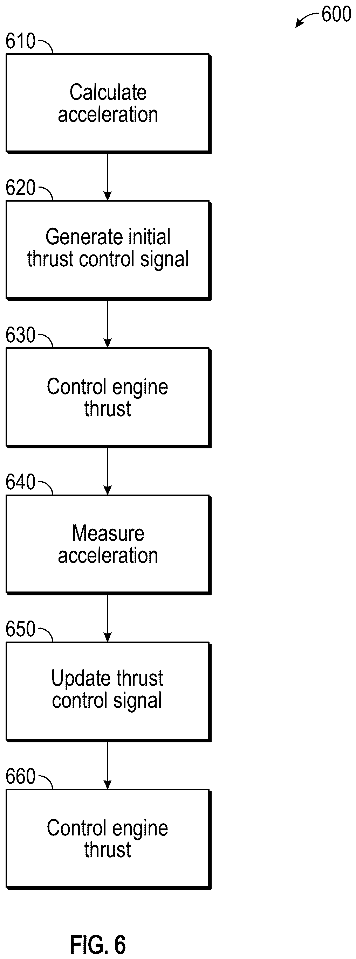

Turning now to Fig. 6, a flow diagram illustrating another non-limiting embodiment of a method 600 for providing a variable engine thrust takeoff system in an aircraft, wherein the method 600 is first operative for calculating 610 a calculated acceleration in response to a takeoff distance and a selection of a variable engine thrust takeoff mode. In one exemplary embodiment, the calculated acceleration may be determined in response to an aircraft payload and an ambient air pressure. In addition, the calculated acceleration may be calculated in response to an ambient temperature. In one exemplary embodiment, the selection of the variable engine thrust takeoff mode may be determined in response to a thrust lever position. For example, the selection of the variable engine thrust takeoff mode may be a determined in response to a thrust lever positioned at a derated takeoff detent. In an alternative embodiment, the selection of the variable engine thrust takeoff mode may be determined in response to a user input on a control interface. The calculated acceleration may further be determined in response to an aircraft payload and an ambient air pressure.

The method is next operative for generating 620 an initial thrust control signal in response to the calculated acceleration. The initial thrust control signal may be determined in response to the aircraft characteristics and the calculated acceleration in order to propel the aircraft at the calculated acceleration during an initial stage of the takeoff operation. The method is next operative for controlling 630 a thrust of an aircraft engine in response to the initial thrust control signal; wherein controlling a thrust of an aircraft engine is performed by controlling a fuel supply rate to the aircraft engine.

The method is next operative for measuring 640 a measured acceleration of the aircraft; wherein the measured acceleration may be determined in response to an airspeed measurement measured by an airspeed sensor. Alternatively, the measured acceleration may be determined in response to an initial velocity and a final velocity of a distance interval during a takeoff operation.

The method is next operative for generating 650 an updated thrust control signal in response to a difference between the calculated acceleration and the measured acceleration; The method may be operative to determine the measured acceleration and adjust the thrust control signal periodically during a takeoff operation such that the measured acceleration is maintained closely to the calculated acceleration during the takeoff operation. The method is next operative for controlling 660 the thrust of the aircraft engine in response to the updated thrust control signal.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those of ordinary skill in the art with a convenient road map for implementing the exemplary embodiment or exemplary embodiments. It should be understood that various changes can be made in the function and arrangement of elements without departing from the scope of the disclosure as set forth in the appended claims and the legal equivalents thereof.

As used herein, the term processor refers to any hardware, software embodied in a medium, firmware, electronic control component, processing logic, and/or processor device, individually or in any combination, including without limitation: application specific integrated circuit (ASIC), an electronic circuit, a processor (shared, dedicated, or group) and memory that executes one or more software or firmware programs, a combinational logic circuit, and/or other suitable components that perform the described algorithms.

It is further noted that the systems and methods may be implemented on various types of data processor environments (e.g., on one or more data processors) which execute instructions (e.g., software instructions) to perform operations disclosed herein. Non-limiting examples include implementation on a single general purpose computer or workstation, or on a networked system, or in a client-server configuration, or in an application service provider configuration. For example, the methods and systems described herein may be implemented on many different types of processing devices by program code comprising program instructions that are executable by the device processing subsystem. The software program instructions may include source code, object code, machine code, or any other stored data that is operable to cause a processing system to perform the methods and operations described herein. Other implementations may also be used, however, such as firmware or even appropriately designed hardware configured to carry out the methods and systems described herein. For example, a computer can be programmed with instructions to perform the various steps of the flowcharts described herein. The software components and/or functionality may be located on a single computer or distributed across multiple computers.

## Claims

1. A flight control system (300, 500) comprising:
an input (310, 510) configured to indicate a selection of a variable engine thrust takeoff mode;
an inertial sensor (330, 520) operative to generate an acceleration data signal indicative of an acceleration of the aircraft;
a thrust controller (340, 530) operative to control a thrust of an aircraft engine in response to a thrust control signal; and, **characterised by**
a processor (320, 540) operative to calculate a calculated acceleration in response to the selection of the variable engine thrust takeoff mode, to generate the thrust control signal corresponding to a first thrust level associated with the calculated acceleration, for determining a measured acceleration in response to the acceleration data signal, and for adjusting the thrust control signal to maintain a constant measured acceleration close to the calculated acceleration in response to a difference between the calculated acceleration and the measured acceleration.

2. The flight control system of claim 1, wherein the input is a thrust lever.

3. The flight control system of claims 1 or claim 2, wherein the input is pilot user interface.

4. The flight control system of any one of claims 1-3, wherein the thrust controller is operative to control a fuel supply to the aircraft engine in response to the thrust control signal.

5. The flight control system of any one of claims 1-4, wherein the measured acceleration is further determined in response to an airspeed detected by an airspeed sensor (350).

6. The flight control system of any one of claims 1-5, wherein the calculated acceleration is further calculated in response to at least one of an aircraft weight, a takeoff distance, runway (120) characteristics, and an ambient air pressure.

7. The flight control system of any one of claims 1-6, wherein the input is a thrust lever positioned at a derated takeoff detent.

8. The flight control system of any one of claims 1-7, wherein the processor is further operative to determine the measured acceleration and adjust the thrust control signal periodically during a takeoff operation.

9. A method for controlling an aircraft (110) **characterised by**
calculating a calculated acceleration in response to a takeoff distance and a selection of a variable engine thrust takeoff mode;
generating an initial thrust control signal in response to the calculated acceleration;
controlling a thrust of an aircraft engine in response to the initial thrust control signal;
measuring a measured acceleration of the aircraft;
generating an updated thrust control signal in response to a difference between the calculated acceleration and the measured acceleration; and
controlling the thrust of the aircraft engine in response to the updated thrust control signal, so as to maintain a constant measured acceleration close to the calculated acceleration.

10. The method for controlling the aircraft of claim 9, wherein the selection of the variable engine thrust takeoff mode is determined in response to a thrust lever position, and/or wherein the selection of the variable engine thrust takeoff mode is determined in response to a user input on a control interface, and/or wherein the selection of the variable engine thrust takeoff mode is a determined in response to a thrust lever positioned at a derated takeoff detent.

11. The method for controlling an aircraft of claim 9 or claim 10, wherein controlling a thrust of an aircraft engine is performed by controlling a fuel supply rate to the aircraft engine.

12. The method for controlling the aircraft of any one of claims 9-11, wherein the measured acceleration is determined in response to an airspeed measurement measured by an airspeed sensor (350), and/or
wherein the measured acceleration is determined in response to an initial velocity and a final velocity of a distance interval during a takeoff operation, and/or
wherein the calculated acceleration is determined in response to an aircraft payload and an ambient air pressure, and/or
wherein the calculated acceleration is calculated in response to an ambient temperature.

13. An aircraft (110) comprising a flight control system (300, 500) according to any one of claims 1-8.

## Patentansprüche

1. Flugregelsystem (300, 500), das Folgendes umfasst:
eine Eingabe (310, 510), die dafür konfiguriert ist, eine Auswahl eines Startmodus mit veränderlichem Triebwerksschub anzugeben,
einen Trägheitssensor (330, 520), der funktionsfähig ist, um ein Beschleunigungsdatensignal zu erzeugen, das auf eine Beschleunigung des Flugzeugs schließen lässt,
einen Schubregler (340, 530), der funktionsfähig ist, um als Reaktion auf ein Schubregelungssignal einen Schub eines Flugzeugtriebwerks zu regeln, **gekennzeichnet durch**
einen Prozessor (320, 540), der funktionsfähig ist, um als Reaktion auf die Auswahl des Startmodus mit veränderlichem Triebwerksschub eine berechnete Beschleunigung zu berechnen, das Schubregelungssignal zu erzeugen, das einem ersten Schubniveau entspricht, das mit der berechneten Beschleunigung verknüpft ist, zum Bestimmen einer gemessenen Beschleunigung als Reaktion auf das Beschleunigungsdatensignal und zum Einstellen des Schubregelungssignals, um als Reaktion auf eine Differenz zwischen der berechneten Beschleunigung und der gemessenen Beschleunigung eine konstante gemessene Beschleunigung nahe der berechneten Beschleunigung aufrechtzuerhalten.

2. Flugregelsystem nach Anspruch 1, wobei die Eingabe ein Schubhebel ist.

3. Flugregelsystem nach Anspruch 1 oder Anspruch 2, wobei die Eingabe eine Piloten-Anwenderschnittstelle ist.

4. Flugregelsystem nach einem der Ansprüche 1 bis 3, wobei der Schubregler funktionsfähig ist, um als Reaktion auf das Schubregelungssignal eine Treibstoffzufuhr zu dem Flugzeugtriebwerk zu regeln.

5. Flugregelsystem nach einem der Ansprüche 1 bis 4, wobei die gemessene Beschleunigung ferner als Reaktion auf eine Fluggeschwindigkeit bestimmt wird, die durch einen Fluggeschwindigkeitssensor (350) erfasst wird.

6. Flugregelsystem nach einem der Ansprüche 1 bis 5, wobei die berechnete Beschleunigung ferner als Reaktion auf mindestens eines von einem Flugzeuggewicht, einer Startstrecke, Eigenschaften der Start- und Landebahn (120) und einen umgebenden Luftdruck berechnet wird.

7. Flugregelsystem nach einem der Ansprüche 1 bis 6, wobei die Eingabe ein Schubhebel ist, der bei einer Raststellung für gedrosselten Start positioniert ist.

8. Flugregelsystem nach einem der Ansprüche 1 bis 7, wobei der Prozessor ferner funktionsfähig ist, um periodisch während eines Startvorgang die gemessene Beschleunigung zu bestimmen und das Schubregelungssignal einzustellen.

9. Verfahren zum Steuern eines Flugzeugs (110), **gekennzeichnet durch**:
Berechnen einer berechneten Beschleunigung als Reaktion auf eine Startstrecke und eine Auswahl eines Startmodus mit veränderlichem Triebwerksschub,
Erzeugen eines anfänglichen Schubregelungssignals als Reaktion auf die berechnete Beschleunigung,
Regeln eines Schubs eines Flugzeugtriebwerks als Reaktion auf das anfängliche Schubregelungssignal, Messen einer gemessenen Beschleunigung des Flugzeugs,
Erzeugen eines aktualisierten Schubregelungssignals als Reaktion auf eine Differenz zwischen der berechneten Beschleunigung und der gemessenen Beschleunigung und
Regeln des Schubs des Flugzeugtriebwerks als Reaktion auf das aktualisierte Schubregelungssignal, um so eine konstante gemessene Beschleunigung nahe der berechneten Beschleunigung aufrechtzuerhalten.

10. Verfahren zum Steuern eines Flugzeugs nach Anspruch 9, wobei die Auswahl des Startmodus mit veränderlichem Triebwerksschub als Reaktion auf eine Schubhebelposition festgestellt wird und/oder wobei die Auswahl des Startmodus mit veränderlichem Triebwerksschub als Reaktion auf eine Benutzereingabe auf einer Steuerungsschnittstelle festgestellt wird und/oder wobei die Auswahl des Startmodus mit veränderlichem Triebwerksschub als Reaktion darauf festgestellt wird, dass ein Schubhebel bei einer Raststellung für gedrosselten Start positioniert ist.

11. Verfahren zum Steuern des Flugzeugs nach Anspruch 9 oder nach Anspruch 10, wobei das Regeln eines Schubs eines Flugzeugtriebwerks durch Regeln einer Treibstoff-Zufuhrgeschwindigkeit zu dem Flugzeugtriebwerk durchgeführt wird.

12. Verfahren zum Steuern des Flugzeugs nach einem der Ansprüche 9 bis 11, wobei die gemessene Beschleunigung als Reaktion auf eine Fluggeschwindigkeitsmessung bestimmt wird, die durch einen Fluggeschwindigkeitssensor gemessen wird, und/oder
wobei die gemessene Beschleunigung als Reaktion auf eine anfängliche Geschwindigkeit und eine Endgeschwindigkeit eines Streckenintervalls während eines Startvorgangs bestimmt wird und/oder
wobei die berechnete Beschleunigung als Reaktion auf eine Flugzeug-Nutzlast und einen umgebenden Luftdruck bestimmt wird und/oder
wobei die berechnete Beschleunigung als Reaktion auf eine Umgebungstemperatur berechnet wird.

13. Flugzeug (110), das ein Flugregelsystem (300, 500) nach einem der Ansprüche 1 bis 8 umfasst.

## Revendications

1. Système de commande de vol (300, 500) comprenant :
une entrée (310, 510) configurée pour indiquer une sélection d'un mode de décollage à poussée du moteur variable ;
un capteur inertiel (330, 520) opérationnel pour générer un signal de données d'accélération indiquant une accélération de l'avion ;
un contrôleur de poussée (340, 530) opérationnel pour contrôler la poussée d'un moteur d'avion en réponse à un signal de commande de poussée ; et, **caractérisé par**
un processeur (320, 540) opérationnel pour calculer une accélération calculée en réponse à la sélection du mode de décollage à poussée variable du moteur, pour générer le signal de commande de poussée correspondant à un premier niveau de poussée associé à l'accélération calculée, pour déterminer une accélération mesurée en réponse au signal de données d'accélération, et pour ajuster le signal de commande de poussée afin de maintenir une accélération mesurée constante proche de l'accélération calculée en réponse à une différence entre l'accélération calculée et l'accélération mesurée.

2. Système de commande de vol selon la revendication 1, dans lequel l'entrée est un levier de poussée.

3. Système de commande de vol selon la revendication 1 ou la revendication 2, dans lequel l'entrée est l'interface d'utilisateur du pilote.

4. Système de commande de vol selon une quelconque des revendications 1 à 3, dans lequel le contrôleur de poussée est opérationnel pour contrôler l'alimentation en carburant du moteur de l'avion en réponse au signal de commande de poussée.

5. Système de commande de vol selon une quelconque des revendications 1 à 4, dans lequel l'accélération mesurée est en outre déterminée en réponse à une vitesse anémométrique détectée par un capteur de vitesse anémométrique (350).

6. Système de commande de vol selon une quelconque des revendications 1 à 5, dans lequel l'accélération calculée est en outre calculée en réponse à au moins un parmi le poids de l'avion, une distance de décollage, les caractéristiques de la piste (120) et une pression de l'air ambiant.

7. Système de commande de vol selon une quelconque des revendications 1 à 6, dans lequel l'entrée est un levier de poussée positionné au niveau d'un cran de décollage déclassé.

8. Système de commande de vol selon une quelconque des revendications 1 à 7, dans lequel le processeur est en outre opérationnel pour déterminer l'accélération mesurée et ajuster périodiquement le signal de commande de poussée pendant une opération de décollage.

9. Procédé de commande d'un aéronef (110), **caractérisé par** :
calculer une accélération calculée en réponse à une distance de décollage et une sélection d'un mode de décollage à poussée du moteur variable ;
générer un signal de commande de poussée initial en réponse à l'accélération calculée ;
contrôler la poussée d'un moteur d'avion en réponse au signal de commande de poussée initial ;
mesurer une accélération mesurée de l'avion ;
générer un signal de commande de poussée mis à jour en réponse à une différence entre l'accélération calculée et l'accélération mesurée ; et
contrôler la poussée du moteur d'avion en réponse au signal de commande de poussée mis à jour, de manière à maintenir une accélération mesurée constante proche de l'accélération calculée.

10. Procédé de commande d'un aéronef selon la revendication 9, dans lequel la sélection du mode de décollage à poussée du moteur variable est déterminée en réponse à une position du levier de poussée, et/ou dans lequel la sélection du mode de décollage à poussée du moteur variable est déterminée en réponse à une entrée d'utilisateur sur une interface de commande, et/ou dans lequel la sélection du mode de décollage à poussée variable du moteur est déterminée en réponse à un levier de poussée positionné au niveau d'un cran de décollage déclassé.

11. Procédé de commande d'un aéronef selon la revendication 9 ou la revendication 10, dans lequel la commande d'une poussée d'un moteur d'avion est effectuée en régulant un débit d'alimentation en carburant du moteur d'aéronef.

12. Procédé de commande d'un aéronef selon une quelconque des revendications 9 à 11, dans lequel l'accélération mesurée est déterminée en réponse à une mesure de vitesse anémométrique mesurée par un capteur de vitesse anémométrique (350), et/ou
dans lequel l'accélération mesurée est déterminée en réponse à une vitesse initiale et une vitesse finale d'un intervalle de distance pendant une opération de décollage, et/ou
dans lequel l'accélération calculée est déterminée en réponse à une charge utile de l'avion et à une pression de l'air ambiant, et/ou
dans lequel l'accélération calculée est calculée en réponse à une température ambiante.

13. Aéronef (110) comprenant un système de commande de vol (300, 500) selon une quelconque des revendications 1-8.
